# EUROPEAN PATENT SPECIFICATION

(11) **EP 1 130 488 B1**
(45) Date of publication and mention of the grant of the patent: **06.09.2006**
(21) Application number: 01500045.8
(22) Date of filing: 21.02.2001
(51) Int. Cl.: G05G 1/14

(54) **Manufacturing method of a brake pedal for motor vehicles**
Herstellungsverfahren für eine Bremspedalanordnung für ein Kraftfahrzeug
Procédé de fabrication d'un pedal de frein pour vehicules automobiles

(30) Priority: 01.03.2000 ES 200000554
(43) Date of publication of application: 05.09.2001
(73) Proprietor: Tubsa Automocion, S.L., 08960 Sant Just Desvern (ES)
(72) Inventor: Millman, Andy, 08960 Sant Just Desvern (ES); Giro Rufino, Carlos, 08960 Sant Just Desvern (ES)
(74) Representative: SUGRANES - VERDONCES - FERREGÜELA

(56) References cited:
- FR-A- 2 523 742
- GB-A- 2 325 511
- US-A- 2 312 277
- US-A- 5 070 717
- US-A- 5 435 205

## Description

### FIELD OF THE INVENTION

The present invention consists of a manufacturing method of a brake pedal body for motor vehicles, which can be applied to a great variety of the latter, in view of the basic operations which integrate the method in question and whose application allows for the aforementioned application.

### BACKGROUND TO THE INVENTION

The known brake pedal bodies are generally made of steel to easily withstand the variable and repeated stresses to which they will be subjected during braking by vehicle drivers.

Brake pedal bodies are frequently irregular in shape in at least one direction which has given rise to problems that are difficult to solve, with repercussions on both the tooling, the manufacture and the final product, all of which negatively affects the cost of the brake pedal body.

Furthermore, the aforementioned known brake pedal bodies frequently adopt the final shape of a flattened tube obtained by means of two longitudinal and opposite weldings. These brake pedal bodies adopt an irregular and flattened tube shape, which, in short, are obtained by a method consisting of treating by mechanical means (for example, stamping) pairs of plates of suitable thickness, cut beforehand and doing the appropriate folding and bending on both parts of each pair, which subsequently have to be able to be facing and joining each other. For this, both parts are welded to each other and the necessary finishing operations are carried out, which may include the orifice for the passage of the body articulation axis and, in the case in point, another or other orifices for other purposes (all orifices which can be made before or after the welding of the two parts), as well as the fixing, at the opposite end to the body articulation, of the support plate for the driver's foot.

Document FR 2523742 describes a method for obtaining a brake pedal body made of one peace, said method including the steps of bending and flattering a cylindrical tube.

### SUMMARY OF THE INVENTION

The manufacturing method for a brake pedal body for motor vehicles, object of the invention, is of the type which comprises obtaining, by mechanical means and from one peace, brake pedal bodies of a flattened tubular and irregular shape in at least one direction and provided with a transversal passage for the body articulation axle, the passage resulting from the obtaining of two facing and aligned orifices. The aforementioned bodies are also equipped, in the case in point, with another or other orifices for other purposes, such as a transversal passage for the articulation of the cable or of the transmission rod to the braking system device.

The method, in accordance with the invention, is characterized by obtaining from a cylindrical tube a frustoconical tube by carrying out an exterior machining operation, reducing the wall thickness of one end, followed by a reshaping operation to give to the tube obtained a suitable conicity; by bending it into a predetermined shape and then flattening it in at least one part of the same.

Obviously, it shall be possible for one or more complementary conventional operations to be done before and/or after those previously defined as essential to the invention. The machining of the tube externally enables a certain quantity of material to be eliminated, with the resulting decrease in the body weight and without affecting its mechanical resistance since it is done on those parts of the brake pedal body which are not critical, that is to say, that they do not withstand great stress. This, or these, machining operations do not affect the inside of the tube and, moreover, by means of them, adjusting the weight of the tube, in other words, the pedal body, to the real requirements of the body, is achieved.

The method of manufacturing of a brake pedal body for motor vehicles, object of the invention, provides, among other things, the following advantages with regard to the known methods:
a) The method of manufacture is done with less complex and less expensive tooling than in the case of known methods, resulting in a reduction in cost of the former.
b) Elimination of the welding operation, with the elimination of the corresponding deformations of parts of unpredictable control reduction in reject parts and the obtaining of savings resulting from all of it.
c) Elimination of the finishing operation corresponding to the elimination of external projections because of the welding, with the resulting cost savings.
d) A relatively simpler method of manufacture, resulting in a shorter execution time and, thus, a lower final cost.
e) The operations carried out on the starting tube and those which will go on being applied in the diverse operative phases of the procedure tend to regulate and homogenize the mechanical stresses that the tube withstands during the process, besides those which may arise from the start; and all in relation to the mechanical stresses arising from the peculiar operations of the known methods.

The manufacturing method of a brake pedal body for motor vehicles, object of the invention, provides the advantages described earlier, as well as others which will be easily inferred from the example of embodiment of the aforementioned method described further on in order to facilitate the understanding of the features shown in order of precedence and, at the same time, disclose various details of the same, some drawings being enclosed therein for such purpose, in which, by way of example only, and not restricting the scope of the invention a practical case, object of the same, is represented.

### BRIEF DESCRIPTION OF THE DRAWINGS

Figure 1 shows an elevation view of a known brake pedal body whose upper and lower longitudinal edges correspond to each welding line.
Figure 2 is a plan view of the body in accordance with figure 1.
Figure 3 corresponds to the original tube once it is machined, provided originally with some conicity, and a section view, along line 3-3, of the same.
Figure 4 shows the tube already provided with the desired conicity, thereby having adopted a general frustoconical shape, and a plan view of the same.
Figure 5 represents the development of the frustoconical tube according to an elevation view, to which a resultant conformation has been given by the application of specific bending in order to subsequently obtain the final body.
Figure 6 is a plan view of the development of 30 the tube of figure 5.
Figure 7 shows the final brake pedal body in accordance with a side view.
Figure 8 is a plan view of the body according to figure 7.
Figure 9 is a frontal view of the body according to figure 7.
Figure 10 corresponds to a perspective view of the brake pedal body.

### DESCRIPTION OF AN EMBODIMENT IN ACCORDANCE WITH THE INVENTION

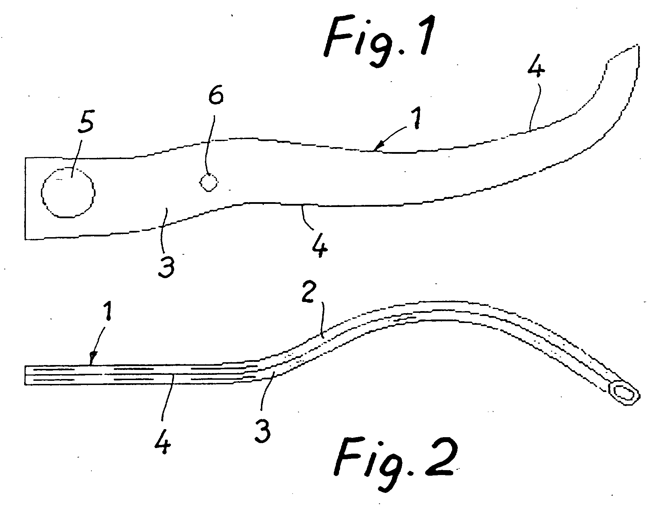

For the manufacture of the brake pedal body in accordance with the method, object of the invention, one initially starts from a conventional cylindrical tube, which is not represented in the drawings. Following the drawings, in figures 1 and 2 a known brake pedal body -1- is shown, composed of two half-pieces -2- and -3- facing and joined to one another by two welding lines or beads -4- , which prior to their welding or subsequent to the same, have been suitably bent and to whose brake pedal body the necessary finishing operations have been applied, such as the elimination of external projections caused by the welding and those possible ones on making orifice -5- for the passing of the articulation axis of the body and other orifices, such as orifice -6-, for other complementary passages. The joining of said half-pieces -2- and -3- is done by facing their two corresponding edges or by partial juxtaposition of their respective ends, these half-pieces being out of phase with each other.

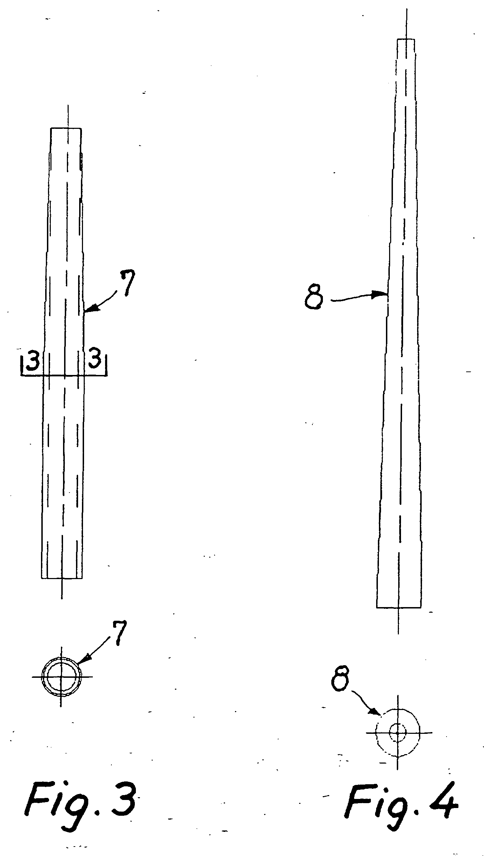

Moreover, starting from a cylindrical tube of predetermined dimensions in accordance with those of the brake pedal body to be obtained, the tube -7-(fig. 3) is obtained by carrying out an exterior machining operation. In this way a certain quantity of (material is removed from the tube, achieving thus a~ reduction in the weight of the body, the tube wall) thickness being reduced in those parts which do not have to withstand a great deal of stress. An operation is applied to the tube thus obtained in order to give it a suitable conicity, resulting in a frustoconical tube -8- (fig.4).

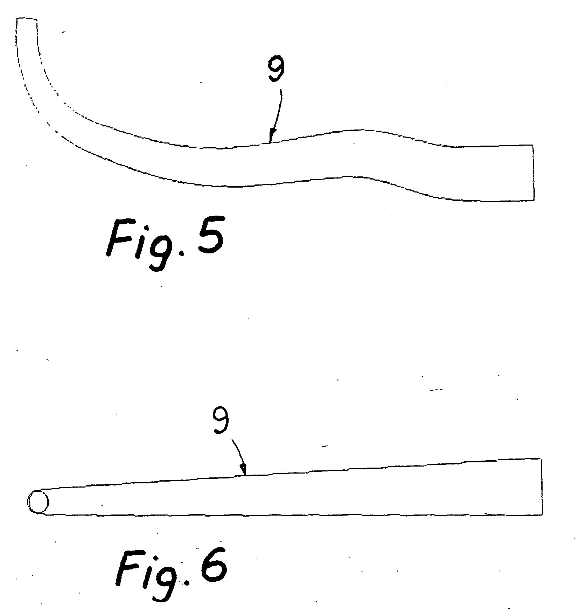

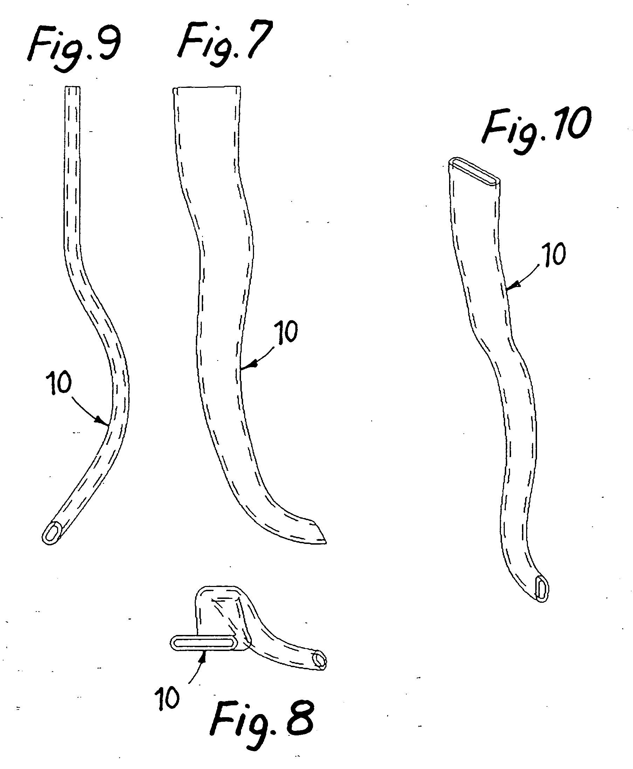

The tube -8- is subject to a bending or shaping operation on a vertical plane, obtaining thus, the tube -9- (figs.5 and 6). It will obviously be possible for the aforementioned operations to be carried out in two or more directions, bearing in mind that the dimensional and configurative features of the diverse parts of the body are a function of the same as the final brake pedal body to be obtained.

In figures 7 to 9 brake pedal -10- is shown as the final body manufactured in accordance with the method, object of the invention, which has been obtained starting from tube -9- with a flattening or squashing operation according to a specific geometric plane and the desired size and dimensions. It is deemed advisable to re-configure the brake pedal body -10- in order to regain or adjust the predetermined final dimensions and configuration, since this last operation can cause one, or some, dimensional and/or configurative variations. It has to be pointed out that the aforementioned flattening operation can be carried out according to more than one geometric plane on more than one part of the body and in accordance with different directions or orientations of such planes.

The brake pedal body -10- is shown in perspective in figure 10, wherein we can observe - together with what results from the combination of figures 7, 8 and 9 - its specific configuration in this embodiment example of the method in question, so that said body is conformed on three main axes. The method, in accordance with the invention, can obviously be applied to the manufacture of brake pedal bodies of different shapes and configurations without altering, because of that, the essence of the invention, arranging its integral part or parts according to one or more main axes. Likewise, the starting tube material will, in practice, be steel, although the use of other materials, sufficiently resistant to the use or purpose of the brake pedal body, cannot be ruled out.

## Claims

1. Method for manufacturing a brake pedal body for motor vehicles, of the type which comprises obtaining, by mechanical means and from one piece, brake pedal bodies of a flattened tubular shape and irregular in at least one direction and provided with a passage for the body articulation axle; **characterized by**
- obtaining from a cylindrical tube a frustoconical tube by carrying out an exterior machining operation, reducing the wall thickness of one end, followed by a reshaping operation to give it a suitable conicity;
- bending the frustoconical tube thus obtained into a predetermined shape, and then flattening it in at least one part of the same.

## Patentansprüche

1. Verfahren zum Herstellen eines Bremspedalkörpers für Motorfahrzeuge der Art, welches durch mechanische Mittel und aus einem Stück das Erzielen von Bremspedalkörpern einer abgeflachten rohrförmigen Form, und unregelmäßig in mindestens einer Richtung und vorgesehen mit einer Passage für die Gelenkachse des Körpers, umfasst, **gekennzeichnet durch**
- erzielen eines kegelstumpfförmigen Rohres aus einem zylindrischen Rorhdurch Ausführen eines die Wanddicke eines Endes reduzieren äußeren maschinellen Bearbeitungsganges, gefolgt von einem umformenden Arbeitsgang, um ihm eine passende Konizität zu geben;
- Biegen des so erzielten kegelstumpfförmigen Rohres in eine vorherbestimmte Form, und dann sein Abflachen auf mindestens einem Teil desselben.

## Revendications

1. Procédé de fabrication d'un corps de pédale de frein pour véhicules à moteur, du type qui comprend l'obtention, par des moyens mécaniques et à partir d'une seule pièce, d'un corps (1) de pédale de frein ayant une forme tubulaire plate et irrégulière dans une direction au moins, et pourvu d'un passage pour l'axe d'articulation du corps; **caractérisé par**ce que:
- On obtient un tube tronconique (8) à partir d'un tube cylindrique, moyennant une opération de mécanisation extérieure, on réduit l'épaisseur du mur à une extrémité, et on réalise ensuite une opération de mise en forme pour lui donner une conicité adéquate;
- On plie le tube tronconique (8) obtenu pour lui donner une forme prédéterminée, et on l'aplatit ensuite au moins sur une partie.
